# FASCICULE DE BREVET EUROPEEN

(11) **EP 1 800 924 B1**
(45) Date de publication et mention de la délivrance du brevet: **20.01.2010**
(21) Numéro de dépôt: 06301149.8
(22) Date de dépôt: 15.11.2006
(51) Int. Cl.: B60J 3/02

(54) **Véhicule automobile comportant des pare-soleils escamotables dans une traverse longitudinale centrale du toit dudit véhicule**
KFZ mit Sonnenblende, die in einem in Längsrichtung verlaufenden mittigen Dachholm verstaut wird
Sun visor which is stowed in a longitudinal central roof beam

(30) Priorité: 20.12.2005 FR 0553968
(43) Date de publication de la demande: 27.06.2007
(73) Titulaire: RENAULT S.A.S., 92100 Boulogne Billancourt (FR)
(72) Inventeur: Dortindeguey, Nicolas, 91190, Villiers Le Bacle (FR)

(56) Documents cités:
- EP-A- 1 510 445
- DE-A1- 10 334 706
- US-A- 4 729 596
- US-A- 4 738 481
- PATENT ABSTRACTS OF JAPAN vol. 2003, no. 12, 5 décembre 2003 (2003-12-05) & JP 2005 219623 A (KASAI KOGYO CO LTD), 18 août 2005 (2005-08-18)

## Description

### DOMAINE TECHNIQUE ET ART ANTÉRIEUR

La présente invention se rapporte à un véhicule automobile comportant des pare-soleil aptes à venir se loger dans une partie centrale d'un toit dudit véhicule, en particulier le toit étant formé par deux surfaces vitrées raccordées par une traverse centrale raccordant une traverse avant et une traverse arrière du toit.

Les véhicules automobiles conventionnels comportent un habitacle muni à l'avant d'un pare-brise pour permettre la visibilité d'un conducteur. Des pare-soleil sont prévus, généralement un pour le conducteur et un pour le passager pour occulter une partie de la lumière traversant le pare-brise et qui pourrait gêner la conduite du conducteur ; de plus les pare-soleil améliorent le confort du conducteur et du passager.

Les pare-soleil sont généralement montés sur une traverse latérale supérieure au dessus du pare-brise. Les pare-soleil peuvent pivoter autour d'un axe parallèle à la traverse latérale entre une position rangée, dans laquelle ils sont rabattus contre le toit de l'habitacle et une position d'utilisation, dans laquelle ils sont rabattus contre le pare-brise pour protéger de la lumière.

Il existe également des pare-soleil pouvant pivoter autour d'un axe sensiblement vertical pour être rabattus contre une vitre latérale et protéger d'une lumière venant sur le côté du véhicule.

En outre, tel que décrit dans la publication US-A-4729596, afin d'augmenter la clarté de l'habitacle, le toit peut être composé de parties vitrées, notamment de deux parties vitrées s'étendant de l'avant vers l'arrière du toit et raccordées dans la partie centrale par une traverse longitudinale.

Dans ce cas, chaque pare-soleil en position rangée est rabattu contre la partie vitrée correspondante, ce qui d'une part diminue la quantité de lumière pouvant passer à travers cette partie vitrée et donc la clarté de l'habitacle, et d'autre part est relativement inesthétique.

C'est par conséquent un but de la présente invention d'offrir un véhicule dont la clarté de l'habitacle est augmentée.

C'est également un but de la présente invention d'offrir un habitacle dont l'aspect esthétique est amélioré.

### EXPOSÉ DE L'INVENTION

Les buts précédemment énoncés sont atteints par un pare-soleil venant se loger dans un compartiment prévu dans la traverse centrale.

En d'autres termes, le pare-soleil n'est plus rabattu contre une partie du toit transparente à la lumière maïs contre une partie du toit opaque à la lumière, ainsi il n'empêche pas la lumière de pénétrer dans l'habitacle par le toit. En outre, le pare-soleil peut venir se ranger dans une fente, ainsi il est totalement invisible en position rangée. Il peut également venir se loger dans un renfoncement.

La présente invention a principalement pour objet un véhicule automobile comportant un toit muni d'une traverse longitudinale centrale et d'au moins deux parties vitrées de part et d'autre de ladite traverse longitudinale centrale, le véhicule comportant également au moins un pare-soleil destiné à occulter une partie de la lumière pénétrant par une partie supérieure d'un pare-brise avant, ledit pare-soleil étant mobile en rotation autour d'un axe sensiblement orthogonal à un plan du toit et autour d'un axe sensiblement parallèle à un plan du toit, ledit pare-soleil étant apte à venir se loger dans un logement prévu dans la traverse longitudinale centrale.

De manière avantageuse, le pare-soleil est monté sur la traverse longitudinale centrale par un coin du pare-soleil.

Dans un exemple de réalisation, le logement dans la traverse longitudinale centrale est une fente.

Des moyens de guidage pour la mise en place du pare-soleil dans la fente peuvent alors être prévus.

Dans un autre exemple de réalisation, le logement dans la traverse longitudinale centrale est un renfoncement.

Le déplacement du pare-soleil, peut s'effectuer au moyen d'un moteur électrique actionnable à l'aide d'une commande disposée à l'intérieur du véhicule.

La présente invention a également pour objet un procédé pour disposer un pare-soleil en position d'occultation d'une partie de la lumière traversant un pare-brise d'un véhicule automobile, ledit véhicule comportant un toit muni d'une traverse longitudinale centrale et de parties vitrées de part et d'autre de ladite traverse longitudinale centrale, ledit procédé comportant les étapes :
- de pivotement du pare-soleil autour d'un axe sensiblement orthogonal à un plan du toit,
- de pivotement du pare-soleil autour d'un axe sensiblement parallèle au plan du toit.

La présente invention a également pour objet un procédé pour ranger un pare-soleil dans une traverse longitudinale centrale d'un toit d'un véhicule automobile, ledit toit comportant des parties vitrées de part et d'autre de ladite traverse longitudinale centrale, ledit procédé comportant les étapes :
- de pivotement du pare-soleil autour d'un axe sensiblement parallèle au plan du toit,
- de pivotement du pare-soleil autour d'un axe sensiblement orthogonal à un plan du toit.

### BRÈVE DESCRIPTION DES DESSINS

La présente invention sera mieux comprise à l'aide de la description qui va suivre et des dessins annexés, sur lesquels :
- la figure 1 est une vue en perspective de l'intérieur d'un habitacle d'un véhicule de l'état de la technique,
- la figure 2A est une vue en perspective de l'intérieur d'un habitacle d'un véhicule automobile selon un exemple de réalisation de la présente invention dans lequel un pare-soleil est en position rangée,
- la figure 2B est une vue en perspective de l'intérieur d'un habitacle d'un véhicule automobile selon la présente invention dans lequel un pare-soleil est en position d'utilisation,
- la figure 3 est une vue en perspective de l'intérieur d'un habitacle d'un véhicule automobile selon un autre exemple de la présente invention dans lequel un pare-soleil est en position d'utilisation,
- la figure 4 est une vue en perspective d'un véhicule automobile selon la présente invention.

### EXPOSÉ DÉTAILLÉ DE MODES DE RÉALISATION PARTICULIERS

Sur les différentes figures, les mêmes références seront utilisées pour désigner les mêmes éléments.

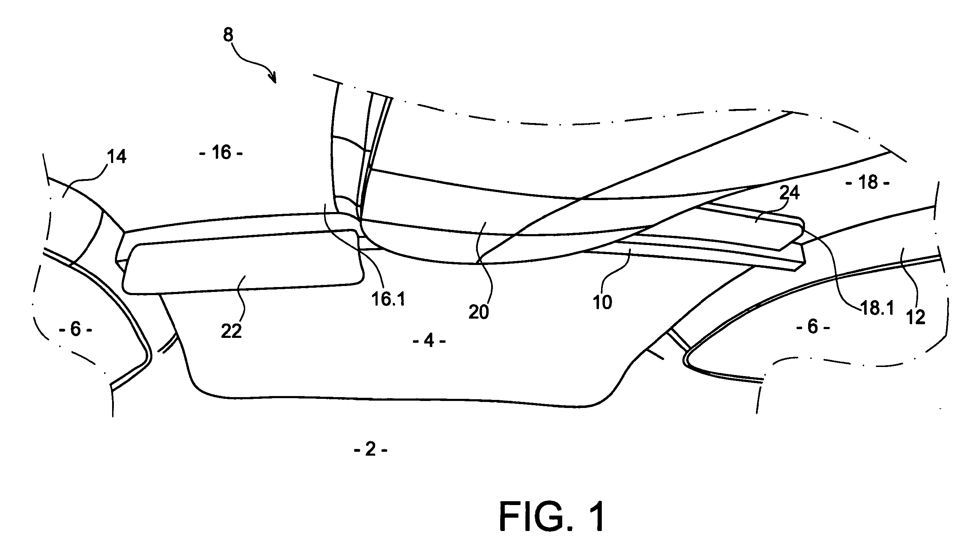

Sur la figure 1, on peut voir un habitacle 2 d'un véhicule de l'état de la technique.

La vue est celle d'une personne assise dans le siège du conducteur.

L'habitacle 2 d'un véhicule automobile est délimité par un pare-brise avant 4, un pare-brise arrière (non visible), des vitres latérales 6 (représentées partiellement), un plancher (non visible) et un toit 8.

Le toit 8 est délimité par des traverses latérales avant 10 et arrière (non visibles) et des traverses longitudinales latérales droite 12 et gauche 14 dans le sens de déplacement du véhicule.

Le toit comporte deux parties vitrées 16, 18 s'étendant entre la traverse latérale avant 10 et la traverse latérale arrière et se raccordant à une traverse longitudinale centrale 20 raccordée à la traverse latérale avant 10 et la traverse latérale arrière.

L'habitacle 2 comporte également au moins un pare-soleil, avantageusement deux 22, 24 montés sur la traverse latérale avant au droit des extrémités avant 16.1, 18.1 des parties vitrées 16, 18 respectivement.

Les pare-soleil 22, 24 sont aptes à pivoter autour d'un axe X sensiblement parallèle à la traverse latérale avant.

Sur la partie droite du dessin, le pare-soleil 24 est en position rangée, c'est-à-dire qu'il est rabattu contre l'extrémité avant 18.1 de la partie vitrée 18. Le pare-soleil 18 empêche une partie de la lumière d'entrer dans l'habitacle par la partie vitrée 18 et est relativement visible, ce qui rend la présence du pare-soleil peu esthétique.

La présente invention permet de limiter ces inconvénients.

En effet, selon la présente invention, le pare-soleil vient se rabattre contre ou se ranger dans la traverse longitudinale centrale. Ainsi il n'occulte plus une partie de la lumière susceptible de passer par la partie vitrée et sa présence en position rabattue est sensiblement moins remarquable.

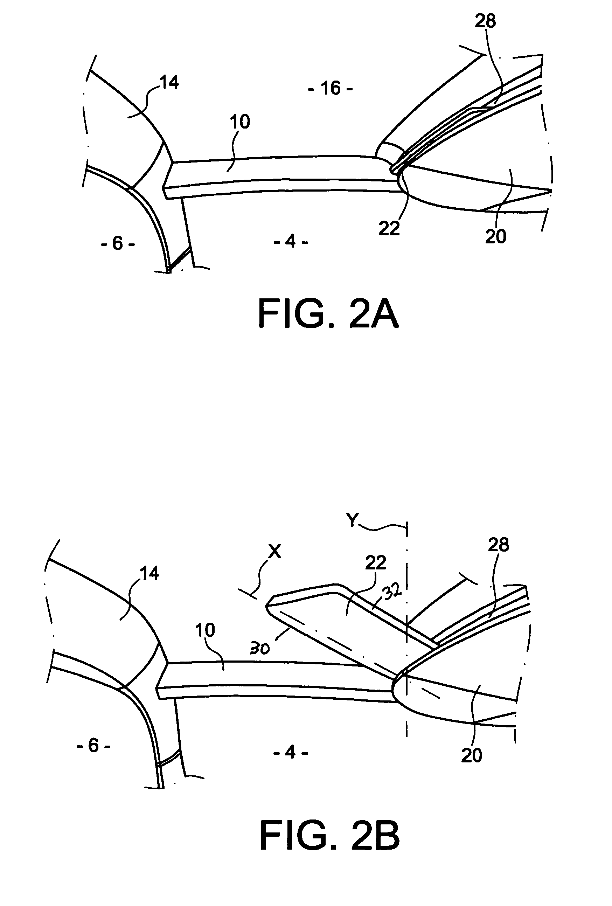

Sur les figures 2A et 2B, on peut voir un exemple de réalisation de la présente invention.

La vue est celle d'une personne assise dans le siège du conducteur.

Nous ne décrirons que le pare-soleil côté conducteur dans le cas d'une conduite à gauche, mais la description s'applique également au pare-soleil côté passager.

Le pare-soleil 22 selon la présente invention est monté mobile en rotation autour de deux axes X et Y. Dans l'exemple de réalisation représentée sur les figures 2A et 2B, le premier axe X est situé le long d'un premier bord 30 du pare-soleil orienté du côté du pare-brise avant 4. L'axe X est destiné à être sensiblement parallèle à la traverse latérale avant 10 lorsque le pare-soleil est en position entièrement sortie. L'axe Y est quant à lui sensiblement perpendiculaire au plan du toit 8.

Le pare-soleil 22 est monté par un coin (non visible) sur la traverse longitudinale centrale 20, mobile autour des axes X et Y

Dans l'exemple représenté, la traverse longitudinale centrale 20 comporte un logement 28 en forme de fente apte à recevoir entièrement le pare-soleil 22.

Le logement 28 s'étend longitudinalement dans la traverse longitudinale centrale 20 dans un plan sensiblement parallèle au plan du toit 8.

On pourrait prévoir que le logement 28 ne reçoive qu'une partie du pare-soleil 22 et / ou qu'il soit incliné par rapport au plan du toit 8.

De manière avantageuse, il peut être prévu des moyens (non représentés) pour guider la pénétration dans le logement 28 et le retrait du pare-soleil 22 du logement 28. Ces moyens sont, par exemple formés par une butée limitant le pivotement du pare-soleil 22 autour de l'axe X vers le haut de manière à ce que le pare-soleil 22 se trouve en vis-à-vis du logement 28, avantageusement aligné avec celui-ci lorsqu'il est en contact avec la butée. Cette butée est, par exemple portée par un habillage de la traverse centrale.

Dans un autre exemple de réalisation, le logement 28 peut être formé par un renfoncement ménagé dans la traverse longitudinale centrale 20, le pare-soleil vient alors se rabattre contre la traverse longitudinale centrale 20 dans ce renfoncement.

La manipulation du pare-soleil peut s'effectuer manuellement ou par l'intermédiaire d'une commande, par exemple dite au volant ou sur un tableau de bord ou sur une portière. Ladite commande provoque l'actionnement d'un moteur électrique logé dans la traverse longitudinale centrale 20 et apte à faire pivoter le pare-soleil 22 autour des axes X et Y.

Nous allons maintenant décrire les séquences d'ouverture et de fermeture d'un pare-soleil selon la présente invention dans le cas d'un actionnement manuel.

Lorsque le pare-soleil 22 est en position rangée, le conducteur, qui cherche à occulter une partie de la lumière traversant le pare-brise avant 4 :
- fait pivoter le pare-soleil 22 autour de l'axe Y, le pare-soleil 22 sort de son logement 28, il est alors en position rabattue contre la partie vitrée 16, selon un angle de rotation d'environ 90° dans l'exemple représenté,.
- fait pivoter le pare-soleil 22 autour de l'axe X, le pare-soleil 22 se trouve alors en position d'utilisation, rabattu contre le pare-brise avant 4.

Pour ranger le pare-soleil 22 dans son logement 28, le conducteur :
- fait pivoter le pare-soleil 22 autour de l'axe X, le pare-soleil 22 se trouve en position rabattue contre la partie vitrée 16,
- fait pivoter le pare-soleil 22 autour de l'axe Y, le pare-soleil 22 pénètre dans le logement 28, il est alors en position rangée.

Dans l'exemple décrit, les séquences de pivotement du pare-soleil 22 autour des axes X et Y sont distinctes.

Cependant, lors de la mise en place du pare-soleil en position d'utilisation, on peut prévoir de commencer le pivotement du pare-soleil autour de l'axe X avant la fin de son pivotement autour de l'axe Y.

De même lors du rangement du pare-soleil, le pivotement autour de l'axe Y peut commencer avant celui autour de l'axe X.

Ceci peut avantageusement permettre de réduire le temps de mise en place et de rangement du pare-soleil.

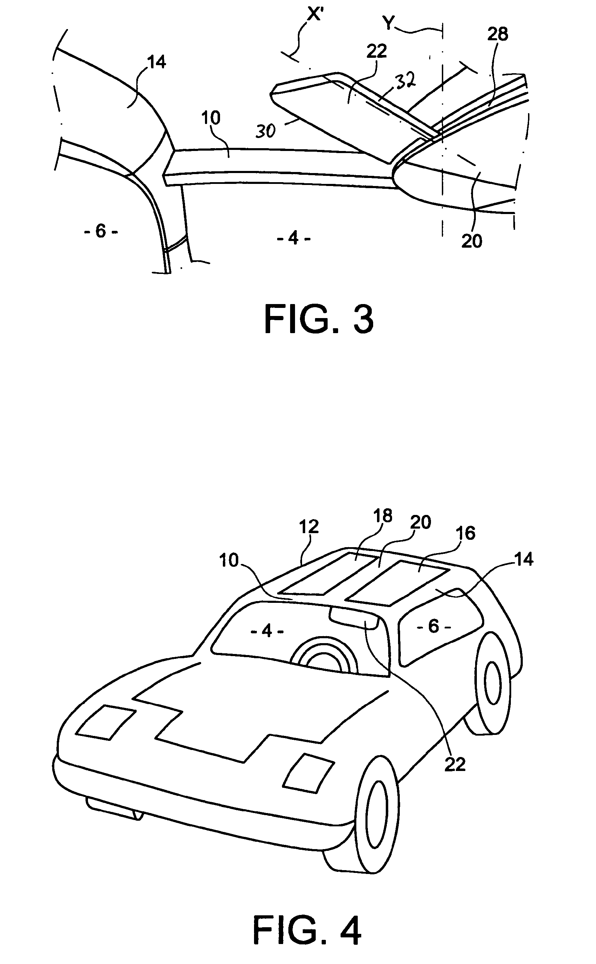

Sur la figure 3, est représenté un autre exemple de réalisation de la présente invention, dans lequel le pare-soleil est apte à pivoter autour d'un premier axe X' et un deuxième axe Y. le premier axe X' est situé le long d'un deuxième bord 32 du pare-soleil, opposé au premier bord 30 du côté du pare-brise avant 4. L'axe X est destiné à être sensiblement parallèle à la traverse latérale avant 10 lorsque le pare-soleil est en position entièrement sortie. L'axe Y est quant à lui sensiblement perpendiculaire au plan du toit 8.

Un décrochement 34 est alors prévu dans le pare-soleil 4 ou dans la garniture de la traverse centrale pour permettre une rotation vers le bas du pare-soleil autour de l'axe X'.

La séquence de sortie et de rangement du pare-soleil sont identiques à celles pour l'exemple de réalisation des figures 2A et 2B.

On peut cependant prévoir un pivotement simultané autour de l'axe X' et de l'axe Y afin d'éviter avantageusement que le pare-soleil 22 bute contre le pare-brise 4. Ainsi lors du déploiement du pare-soleil, celui-ci tourne autour de l'axe Y et dés que le bord du pare-soleil du côté du logement 28 est sorti du logement, celui-ci pivote autour de l'axe X'. Le pare-soleil 22 se trouve alors appliqué contre le pare-brise 4, sans que le premier bord 30 soit venu frapper le pare-brise 4.

On peut prévoir des moyens spécifiques pour provoquer ces deux rotations axiales sensiblement simultanément.

Sur la figure 4, on peut voir un véhicule automobile selon la présente invention du type conduite à gauche dans lequel le pare-soleil 22 côté conducteur est en position d'utilisation et le pare-soleil côté passager est en position rangée.

La présente invention présente l'avantage que le conducteur peut déplacer le pare-soleil par tâtonnement, sans que cela gène la conduite.

En outre, le pare-soleil est peu encombrant.

## Revendications

1. véhicule automobile comportant un toit (8) muni d'une traverse longitudinale centrale (20) et d'au moins deux parties vitrées (16, 18) de part et d'autre de ladite traverse longitudinale centrale (20), **caractérisé en ce que** le véhicule comporte également au moins un pare-soleil (22, 24) destiné à occulter une partie de la lumière pénétrant par une partie supérieure d'un pare-brise (4) avant, ledit pare-soleil (22, 24) étant mobile en rotation autour d'un axe (Y) sensiblement orthogonal à un plan du toit (8) et autour d'un axe (X) sensiblement parallèle au plan du toit (8), ledit paré-soleil (22, 24) étant apte à venir se loger dans un logement (28) prévu dans la traverse longitudinale centrale (20).

2. véhicule automobile selon la revendication 1, dans lequel l'axe (X) se trouve le long d'un premier bord (30) du pare-soleil, qui se trouve du côté du pare-brise (4).

3. Véhicule automobile selon la revendication 1, dans lequel l'axe (X') se trouve le long d'un deuxième bord (32) du paré-soleil, qui est opposé à un premier bord du pare-soleil du côté du pare-brise (4).

4. Véhicule automobile selon la revendication 1, 2 ou 3, dans lequel le pare-soleil (22, 24) est monté sur la traverse longitudinale centrale (20) par un coin.

5. Véhicule automobile selon l'une des revendications 1 à 4, dans lequel le logement (28) dans la traverse longitudinale centrale (20) est une fente.

6. Véhicule automobile selon la revendication précédente, comportant des moyens de guidage pour la mise en place du pare-soleil (22, 24) dans la fente (28).

7. Véhicule automobile selon l'une des revendications 1 à 4, dans lequel le logement (28) dans la traverse longitudinale centrale (20) est un renfoncement.

8. Véhicule automobile selon l'une quelconque des revendications précédentes, dans lequel le déplacement du pare-soleil (22, 24) s'effectue au moyen d'un moteur électrique actionnable à l'aide d'une commande disposée à l'intérieur du véhicule.

9. Procédé pour disposer un pare-soleil (22, 24) en position d'occultation, d'une partie de la lumière traversant un pare-brise (6) d'un véhicule automobile, ledit véhicule comportant un toit (8) muni d'une traverse longitudinale centrale (20) et de parties vitrées (16, 18) de part et d'autre de ladite traverse longitudinale centrale (20), ledit procédé comportant les étapes successives ou simultanées :
- de pivotement du pare-soleil (22, 24) autour d'un axe (Y) sensiblement orthogonal à un plan du toit,
- de pivotement du pare-soleil (22, 24) autour d'un axe (x, x') sensiblement parallèle au plan du toit.

10. Procédé pour ranger un pare-soleil (22, 24) dans une traverse longitudinale centrale (20) d'un toit (8) d'un véhicule automobile, ledit toit (8) comportant des parties vitrées (16, 18) de part et d'autre de ladite traverse, longitudinale centrale (20), ledit procédé comportant les étapes successives ou simultanées :
- de pivotement du pare-soleil (22, 24) autour d'un axe (X, X') sensiblement parallèle au plan du toit,
- de pivotement du pare-soleil (22, 24) autour d'un axe (Y) sensiblement orthogonal à un plan du toit.

## Claims

1. Motor vehicle comprising a roof (8) with a central longitudinal beam (20) and at least two glazed parts (16, 18) on either side of said central longitudinal beam (20), **characterized in that** the vehicle also comprises at least one sun visor (22, 24) designed to block out some of the light entering through the upper part of a front windscreen (4), said sun visor (22, 24) being rotatable about an axis (Y) approximately perpendicular to a plane of the roof (8) and about an axis (X) approximately parallel to the plane of the roof (8), it being possible to stow said sun visor (22, 24) in a housing (28) in the central longitudinal beam (20).

2. Motor vehicle according to Claim 1, in which the axis (X) lies along a first edge (30) of the sun visor which is nearest the windscreen (4).

3. Motor vehicle according to Claim 1, in which the axis (X') lies along a second edge (32) of the sun visor which is opposite a first edge of the sun visor nearest the windscreen (4).

4. Motor vehicle according to Claim 1, 2 or 3, in which the sun visor (22, 24) is mounted on the central longitudinal beam (20) by one corner.

5. Motor vehicle according to one of Claims 1 to 4, in which the housing (28) in the central longitudinal beam (20) is a slot.

6. Motor vehicle according to the preceding claim, comprising guide means for placing the sun visor (22, 24) in the slot (28).

7. Motor vehicle according to one of Claims 1 to 4, in which the housing (28) in the central longitudinal beam (20) is a depression.

8. Motor vehicle according to any one of the preceding claims, in which the sun visor (22, 24) is moved by an electric motor controlled by a control located in the vehicle.

9. Method for placing a sun visor (22, 24) in a position to block out some of the light passing through a windscreen (6) of a motor vehicle, said vehicle comprising a roof (8) with a central longitudinal beam (20) and with glazed parts (16, 18) on either side of said central longitudinal beam (20), said method comprising the following steps, which may be performed in succession or simultaneously:
• the sun visor (22, 24) is pivoted about an axis (Y) approximately perpendicular to a plane of the roof,
• the sun visor (22, 24) is pivoted about an axis (X, X') approximately parallel to the plane of the roof.

10. Method for stowing a sun visor (22, 24) in a central longitudinal beam (20) of a roof (8) of a motor vehicle, said roof (8) comprising glazed parts (16, 18) on either side of said central longitudinal beam (20), and said method comprising the following steps, which may be performed in succession or simultaneously:
• the sun visor (22, 24) is pivoted about an axis (X, X') approximately parallel to the plane of the roof,
• the sun visor (22, 24) is pivoted about an axis (Y) approximately perpendicular to a plane of the roof.

## Patentansprüche

1. Kraftfahrzeug, das ein Dach (8) aufweist, das mit einem mittigen Längsträger (20) und wenigstens zwei Glasabschnitten (16, 18) beiderseits des mittigen Längsträgers (20) versehen ist, **dadurch gekennzeichnet, dass** das Fahrzeug außerdem wenigstens eine Sonnenblende (22, 24) aufweist, die dazu bestimmt ist, einen Teil des Lichts, das durch einen oberen Teil einer vorderen Windschutzscheibe (4) eindringt, abzuschirmen, wobei die Sonnenblende (22, 24) um eine Achse (Y), die zu einer Ebene des Daches (8) im Wesentlichen senkrecht ist, und um eine Achse (X), die zu der Ebene des Daches (8) im Wesentlichen parallel ist, rotatorisch beweglich ist, wobei die Sonnenblende (22, 24) in einem Aufnahmesitz (28), der in dem mittigen Längsträger (20) vorgesehen ist, untergebracht werden kann.

2. Kraftfahrzeug nach Anspruch 1, wobei sich die Achse (X) längs eines ersten Randes (30) der Sonnenblende befindet, der sich auf Seiten der Windschutzscheibe (4) befindet.

3. Kraftfahrzeug nach Anspruch 1, wobei sich die Achse (X') längs eines zweiten Randes (32) der Sonnenblende befindet, der sich gegenüber einem ersten Rand der Sonnenblende auf Seiten der Windschutzscheibe (4) befindet.

4. Kraftfahrzeug nach Anspruch 1, 2 oder 3, wobei die Sonnenblende (22, 24) an dem mittigen Längsträger (20) an einer Ecke montiert ist.

5. Kraftfahrzeug nach einem der Ansprüche 1 bis 4, wobei der Aufnahmesitz (28) in dem mittigen Längsträger (20) ein Schlitz ist.

6. Kraftfahrzeug nach dem vorhergehenden Anspruch, das Führungsmittel für die Anordnung der Sonnenblende (22, 24) im Schlitz (28) enthält.

7. Kraftfahrzeug nach einem der Ansprüche 1 bis 4, wobei der Aufnahmesitz (28) in dem mittigen Längsträger (20) ein Rücksprung ist.

8. Kraftfahrzeug nach einem der vorhergehenden Ansprüche, wobei die Verlagerung der Sonnenblende (22, 24) mittels eines Elektromotors erfolgt, der mit Hilfe einer Steuerung, die in dem Fahrzeug angeordnet ist, betätigt werden kann.

9. Verfahren zum Anordnen einer Sonnenblende (22, 24) in einer Position zum Abschirmen eines Teils des Lichts, das eine Windschutzscheibe (6) eines Kraftfahrzeugs durchquert, wobei das Fahrzeug ein Dach (8) aufweist, das mit einem mittigen Längsträger (20) und mit Glasabschnitten (16, 18) beiderseits des mittigen Längsträgers (20) versehen ist, wobei das Verfahren die folgenden aufeinander folgenden oder gleichzeitigen Schritte enthält:
- Schwenken der Sonnenblende (22, 24) um eine Achse (Y), die zu einer Ebene des Daches im Wesentlichen senkrecht ist,
- Schwenken der Sonnenblende (22, 24) um eine Achse (X, X'), die zu der Ebene des Daches im Wesentlichen parallel ist.

10. Verfahren, um eine Sonnenblende (22, 24) in einem mittigen Längsträger (20) eines Daches (8) eines Kraftfahrzeugs unterzubringen, wobei das Dach (8) Glasabschnitte (16, 18) beiderseits des mittigen Längsträgers (20) aufweist, wobei das Verfahren die folgenden aufeinander folgenden oder gleichzeitigen Schritte enthält:
- Schwenken der Sonnenblende (22, 24) um eine Achse (X, X'), die zu der Ebene des Daches im Wesentlichen parallel ist,
- Schwenken der Sonnenblende (22, 24) um eine Achse (Y), die zu einer Ebene des Daches im Wesentlichen senkrecht ist.
